# EUROPEAN PATENT APPLICATION

(11) **EP 2 186 589 A2**
(43) Date of publication of application: **19.05.2010**
(21) Application number: 08253731.7
(22) Date of filing: 14.11.2008
(51) Int. Cl.: B23D 61/02, B23D 61/12

(54) **Improvements in and relating to chaff products and the manufacture thereof**

(71) Applicant: Chemring Countermeasures Limited, Wiltshire SP4 6AS (GB)
(72) Inventor: Biggs, Martin John, Southampton, Hampshire SO31 6LR (GB); Wilson, Robert, Salisbury, Wiltshire SP4 6AS (GB)
(74) Representative: Townsend, Victoria Jayne

(57) **Abstract**

A rotary blade 1 is provided with a pattern of teeth 2a, 2b, 2c...... which extends around a circumference 5 of the rotary blade. Figures 1(b), 1(c) and 1(d) show the cutting edge of the blade in more detail. The teeth are separated by undercuts 3a, 3b, 3c, equally spaced about the circumference of the blade. Each tooth has a rake angle R which is negative with respect to the Intended direction of cutting by the blade as represented by arrow CD. Alternate teeth 2a, 2c, on a first face F1 of the blade are provided with an angled cutting edge C. Intervening teeth 2b, are similarly ground on the opposing face of the blade F2. The invention may similarly be embodied in a band saw or reciprocating blade.

## Description

This invention relates to products incorporating chaff, methods for the manufacture of such products and apparatus used in the manufacture of such products.

### Background

Chaff is a lightweight reflecting material, typically consisting of aluminium foil strips or metal-coated fibres, which in defence applications are released in the atmosphere to produce radar echoes.

One common form of chaff comprises aluminised glass fibres. Typically the fibres are manufactured by extrusion of glass into elongate strands which are coated along their length with aluminium or alloy or compound containing aluminium. The elongate fibres are collected to form a hank and are wrapped to hold them together. The hanks are chopped to desired lengths. Fibres of varying diameters may be produced.

More than one hank may also be wrapped to form larger hanks. Hanks may be cut to length before or after being assembled into bundles.

Mixed bundles (comprising chaff of different lengths) are typically assembled into a cartridge, pack or other configuration which can be fired and deployed when needed.

Conventionally, smaller size chaff bundles can be cut to sufficient accuracy by a simple guillotine, however, as the diameter of the chaff bundle increases to about 30mm or greater, guillotine cutting can be impractical. At these larger diameters, guillotine cutting results in displacement of dipoles out of their wrapper, associated tearing of packaging and wrapping and distortion at the cut end of the bundle reducing in dipoles of varying length having a consequent detrimental impact on the effectiveness of the countermeasure. It has also been observed that at any diameter, the guillotine method can be impractical for cutting shorter length dipoles.

Rotary cutting has been considered for cutting chaff but brings with it Its own problems. For example, it has been observed that the use of a conventional rotary blade in a conventional manner of rotation can result in fibres being plucked from the chaff bundles. This can have a consequence that the cut dipoles are of variable length and/or a reduction in the number of fibres in the pack resulting In potentially reduced radar cross section and pack height variability outside of specification parameters. At high speeds, the heat generated by a rotating blade can result in local melting of aluminium and end welding of bundles, this can have a consequent negative impact on the dispersion of the chaff when deployed.

### Objects of the Invention

The invention sets out to provide methods of manufacture to provide chaff and chaff products of superior quality for use as a radar countermeasure. In particular, the invention provides cutting apparatus suited to providing accurate length cuts at all diameters of chaff bundles, even where the desired cut length is short.

### Statement of Invention

In one aspect, the Invention comprises a blade for cutting chaff fibres and chaff bundles, the blade being characterised by a plurality of teeth each having a negative rake angle.

The rake angle is preferably between 72 and 85 degrees, more preferably between 75 and 82 and desirably 78 degrees.

Optionally alternate teeth are ground on opposing faces of the blade to provide a cutting edge angled to the plane of the blade. The cutting edge angle is desirably between 35 and 50 degrees, more preferably about 40 degrees. It will be appreciated that where large numbers of smaller teeth are provided, the teeth may be grouped into small numbers (say between 2 and 5) and each group alternately ground on an opposing face, the total number of teeth ground on each face being even in order to maintain balance in the blade.

Desirably, a plurality of the teeth each further include an undercut extending from the rake of one or more of the teeth. Preferably the plurality of undercut teeth is equally spaced about the blade, Preferably, the plurality of undercut teeth is a majority of the teeth and most desirably, all teeth are undercut.

The undercut is desirably arcuate in shape, optionally semi circular. The arc desirably has a radius of between 10 and 15 % of the length of the cutting edge of the tooth. Desirably at least half of the teeth are provided with an undercut; preferably undercut teeth are equally spaced.

In one embodiment, one or more teeth of a rotary blade are essentially elliptical in profile, the elliptical curve providing both the cutting surface of the tooth and an integral undercut.

A preferred material for the blade is TiN (titanium nitride) coated high speed steel (HSS). Optionally, a carbide tip may be added to the blade for improved hardness and extended blade life.

Desirably the blade is a rotary saw blade having a toothed circumference, each tooth having a negative rake angle with respect to the intended direction of rotation. Desirably the rotary blade includes from 50 to 70 equally spaced teeth, more desirably 55 to 66 equally spaced teeth and preferably 60 equally spaced teeth. It is to be understood, however, that the number of teeth appropriate to a particular cutting requirement is influenced by the feed rate and rotation speed of the blade. Consequently, the number of teeth necessary to achieve accurate cutting may be as few as 8.

Whilst rotary blades are preferred, the design principle for the blade may equally be adapted to band saw blades.

In another aspect, the invention comprises a chaff cutting machine including one or more blades having the configuration discussed above.

In another aspect, the invention comprises a method for cutting of chaff by presenting it to a moving blade having a negative rake angle. The blade may have the configuration of any blade already described.

Some embodiments of the invention will now be described in more detail with reference to the following figures in which:
Figure 1 illustrates various views of a first toothed rotary saw blade in accordance with the invention
Figure 2 illustrates various views of a second toothed rotary saw blade in accordance with the invention
Figure 3 illustrates various views of a third toothed rotary saw blade in accordance with the invention.

Figure 4 illustrates various embodiments of toothed band saw blade having cutting edge configurations similar to those of the rotary blades of Figures 1 to 3.

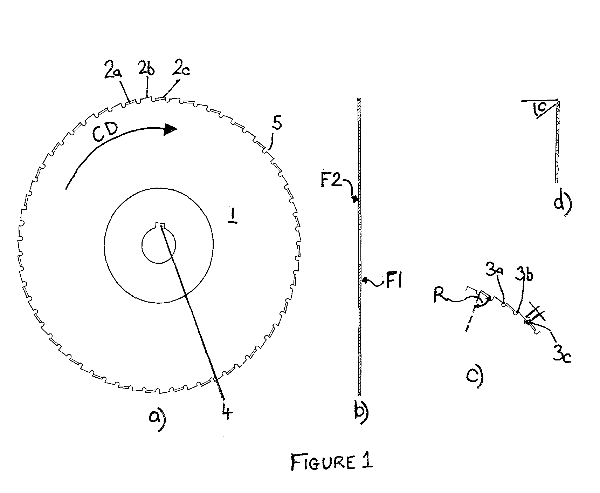

As can be seen from Figure 1(a) a rotary blade 1 is provided with a pattern of teeth 2a, 2b, 2c...... which extends around a circumference 5 of the rotary blade. Figures 1(b), 1(c) and 1(d) show the cutting edge of the blade in more detail. The teeth are separated by undercuts 3a, 3b, 3c, equally spaced about the circumference of the blade. Each tooth has a rake angle R which is negative with respect to the intended direction of cutting by the blade as represented by arrow CD. Alternate teeth 2a, 2c, on a first face F1 of the blade are provided with an angled cutting edge C. Intervening teeth 2b, are similarly ground on the opposing face of the blade F2.

The undercuts 3a, 3b, 3c are substantially semi-circular in shape. At the centre of the blade is an imperial key slot 4 for fixing the blade to a rotor. Alternative forms of key slot and other fastening means may be used for attaching the blade to a cutting machine.

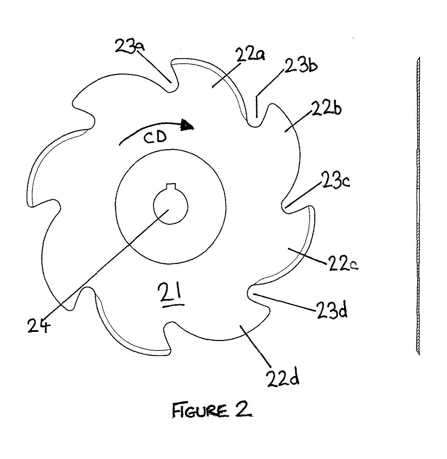

Figure 2 shows an alternative embodiment of a rotary blade 21 in accordance with the invention.

The blade comprises 8 elliptically shaped teeth 22a, 22b, 22c....., each having an associated undercut 23a, 23b, 23c, ..... It will be noted the curve of the each tooth turns smoothly to provide an undercut for the adjacent tooth. Alternate teeth 22a, 22c are ground on a first face of the blade 21 and intermediate blades 22b, 22d are ground on the opposing face.

At the centre of the blade is an imperial key slot 24 for fixing the blade to a rotor. The intended direction of cutting is illustrated by arrow CD.

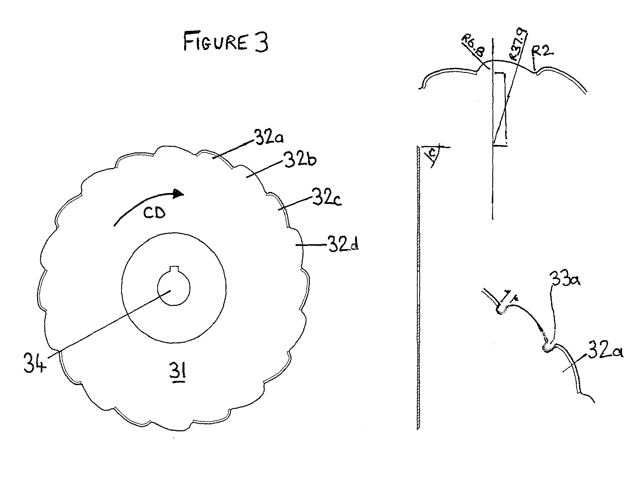

Figure 3 shows another alternative embodiment of a rotary blade 31 in accordance with the invention. The blade comprises a much larger number of teeth 32a, 32b, 32c,.....of substantially elliptical form. Again, alternate teeth 32a, 32c; 32b, 32d are machined on opposite faces of the blade. As shown in the more detailed view on the bottom right of the Figure, small semi-circular undercuts 33a are machined between teeth 32a, 32b, 32c, .....

An imperial key slot 34 is provided at the centre of the blade 31 to enable fixing to a rotor. Alternative forms of key slot and other fastening means may be used for attaching the blade to a cutting machine. The intended direction of cutting is illustrated by arrow CD.

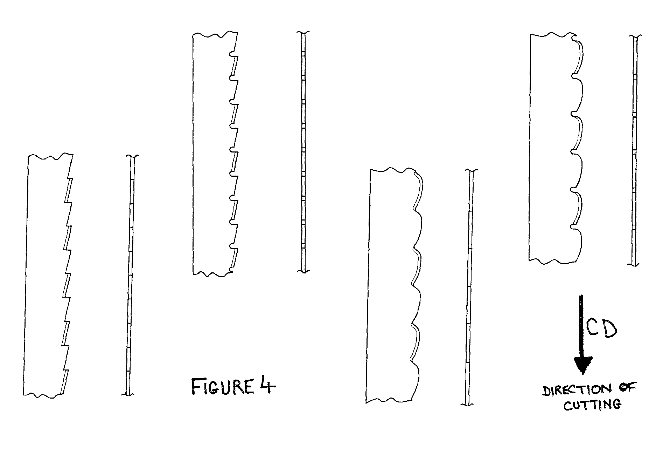

Figure 4 illustrates how the basic designs of the blade shown in Figures 1 to 3 can be adapted to a band saw blade. As with the rotary blades, teeth are cut alternately on opposing faces of the blade. The arrow to the left illustrates the intended direction of cutting.

## Claims

1. A blade for cutting chaff hanks, chaff fibres and chaff bundles, the blade being **characterised by** a plurality of teeth each having a negative rake angle.

2. A blade as claimed in claim 1 wherein the rake angle is between 72 and 85 degrees (inclusive).

3. A blade as claimed in claim 2 wherein the rake angle is between 75 and 82 degrees (inclusive).

4. A blade as claimed in claim 3 wherein the rake angle is 78 degrees.

5. A blade as claimed in any preceding claim wherein alternate teeth are ground on opposing faces of the blade to provide a cutting edge angled to the plane of the blade.

6. A blade as claimed in claim 5 wherein the cutting edge angle is desirably between 35 and 50 degrees (inclusive).

7. A blade as claimed in claim 6 wherein the cutting edge angle is 40 degrees.

8. A blade as claimed in any preceding claim wherein a plurality of the teeth each further include an undercut extending from the rake of one or more of the teeth.

9. A blade as claimed In claim 8 wherein the plurality of undercut teeth is equally spaced about the blade.

10. A blade as claimed in claim 9 wherein the plurality of undercut teeth is a majority of the teeth.

11. A blade as claimed in claim 10 wherein all teeth are undercut.

12. A blade as claimed in any of claims 8 to 11 wherein the undercut is arcuate in shape.

13. A blade as claimed in claim 12 wherein the undercut is semi-circular.

14. A blade as claimed in claim 12 or claim 13 wherein the arc has a radius of between 10 and 15 % of the length of the cutting edge of the tooth.

15. A blade as claimed in any preceding claim wherein the blade is a rotary saw blade having a toothed circumference, each tooth having a negative rake angle with respect to the intended direction of cutting.

16. A blade as claimed in claim 15 wherein the rotary blade includes from 50 to 70 equally spaced teeth.

17. A blade as claimed in claim 16 including from 55 to 66 equally spaced teeth.

18. A blade as claimed in claim 17 having 60 equally spaced teeth.

19. A blade as claimed in any preceding claim wherein one or more teeth of a blade are essentially elliptical In profile, the elliptical curve providing both the cutting surface of the tooth and an integral undercut.

20. A blade as claimed in any preceding claim comprising tin coated high speed steel (HSS).

21. A blade as claimed in claim 20 comprising a carbide tip.

22. A blade as claimed in any of claims 1 to 14 which is a band saw or a reciprocating blade.

23. A chaff cutting machine including one or more blades, the blades having the configuration as set forth in any preceding claim.

24. A method for cutting of chaff by presenting it to a blade having a moving blade having a negative rake angle.

25. A method as claimed in claim 24 performed using the chaff cutting machine of claim 23.
